Europäisches Patentamt

European Patent Office

Office européen des brevets

(11) Publication number: **0 160 463**
**B1**

(12) **EUROPEAN PATENT SPECIFICATION**

(45) Date of publication of patent specification: **05.09.90**

(51) Int. Cl.⁵: **B 41 J 2/175**

(21) Application number: **85302743.1**

(22) Date of filing: **18.04.85**

(54) Valve element for use in an ink-jet printer head.

(30) Priority: **18.04.84 JP 77746/84**

(43) Date of publication of application:
**06.11.85 Bulletin 85/45**

(45) Publication of the grant of the patent:
**05.09.90 Bulletin 90/36**

(84) Designated Contracting States:
**DE FR GB IT**

(56) References cited:
**EP-A-0 112 701**
**DE-A-3 328 598**
**DE-B-2 235 566**

(73) Proprietor: **NEC CORPORATION**
**7-1, Shiba 5-chome Minato-ku**
**Tokyo 108-01 (JP)**

(72) Inventor: **Itano, Tsutomu**
**c/o Nec Corporation 33-1, Shiba 5-chome**
**Minato-ku Tokyo (JP)**
Inventor: **Tsuzuki, Mitsuo**
**c/o Nec Corporation 33-1, Shiba 5-chome**
**Minato-ku Tokyo (JP)**

(74) Representative: **Pears, David Ashley et al**
**REDDIE & GROSE 16 Theobalds Road**
**London WC1X 8PL (GB)**

Courier Press, Leamington Spa, England.

## Description

This invention relates to a valve element for use in an ink-jet printer-head, the valve element being of the kind comprising: a valve member having a plate member, a tongue portion and a fine slit which opens to form or closes to block an ink passageway, the tongue portion being separated from the plate member by the fine slit, and being movable to open or close the ink passageway; and a valve seat having a flat plate portion, an opening portion and a stopper member for limiting tongue movement when the ink passageway is closed.

Conventional valves for ink-jet printer heads are described in the US—A—4 514 742. The conventional valve has a disc-like valve seat having a cylindrical ink passage at its center. A valve member is positioned over the seat to support a disc-like valving member at the center, by arms around the valving member and by a ring-like portion. When ink pressure acts upon the valving member from the ink passage side, the valving member is pushed up and the ink flows out through the gap between the valving member and the valve seat. When the ink pressure acts in the reverse direction, however, the valving member is pushed against the valve seat, cutting off the flow of the ink.

The diameter of the valve member is greater than the diameter of the ink passage. This difference in diameter is preferably as small as possible in order to facilitate the ink flow in the forward direction. This means that a high accuracy is necessary in superposing the valve seat and the valving member. Accordingly, the assembly of the valve member is difficult. The manufacturing yield of acceptable valve members is low and variation of the valve characteristics is great.

The conventional valve element disclosed in DE—A—3 328 598 includes a substrate formed with an opening and a layer having a U-shaped gap so as to form a microreed. The microreed entirely covers the opening, i.e., the gap is positioned on the substrate, or the microreed overlaps the substrate at the portion around the opening. Consequently, it is difficult to stabilize the ink flow characteristics in the forward direction because a high degree of accuracy is necessary in superposing the microreed and the opening. Further, it is easy to collect dust at the overlapping portion. As a result, the manufacturing yield of acceptable valve elements is low and the variation of the valve characteristics is great.

In order to resolve this problem, a single-unit type valve element for use in an ink-jet printer head had been proposed in US—A—4 770 740. The proposed single-unit type valve element includes a valve seat having a fine hole for enabling a passage of fluid ink. A valve seat is formed by use of a photoelectroforming technique. A support portion supports a valving member for covering the hole and for displacing the valve member in response to the pressure of ink. A valve fixing portion is attached to the support portion of the valve seat. The valving member, the support portion, and fixing portion are formed on the valve seat in order to integrate the valve seat, valving member, support portion, and fixing portion, as a single unit. However, in the production process for the single-unit valve element, an extremely high accuracy of several microns is necessary in forming the valve on the valve seat. Accordingly, the manufacturing yield of acceptable valve element is still low. Consequently, the production method is not suitable for economical mass production of large number of valve elements.

Moreover, since the conventional valve elements have overlapping portions between the valving members and the valve seat, it is easy for dust to collect at the overlapping portions.

It is therefore, an object of this invention to provide a valve element for use in an ink-jet printer head which is suitable for economical mass production.

According to this invention, a valve element of the kind defined hereinbefore at the beginning is characterised in that the fine slit is positioned within an area of the opening portion, and the stopper member projects into the opening portion so as to overlie and confront the tongue portion of the valve member.

Other features and advantages of this invention will be apparent from the following description of preferred embodiments taken in conjunction with the accompanying drawings, wherein:

Fig. 1 is a perspective view of a first embodiment of this invention;

Figs. 2(A) and 2(B) are cross sectional views of the first embodiment of this invention;

Figs. 3(A) to 3(I) are cross sectional views for illustrating a method of producing the valve element according to the first embodiment of this invention; and

Figs. 4 and 5 are perspective views of second and third embodiments of this invention, respectively.

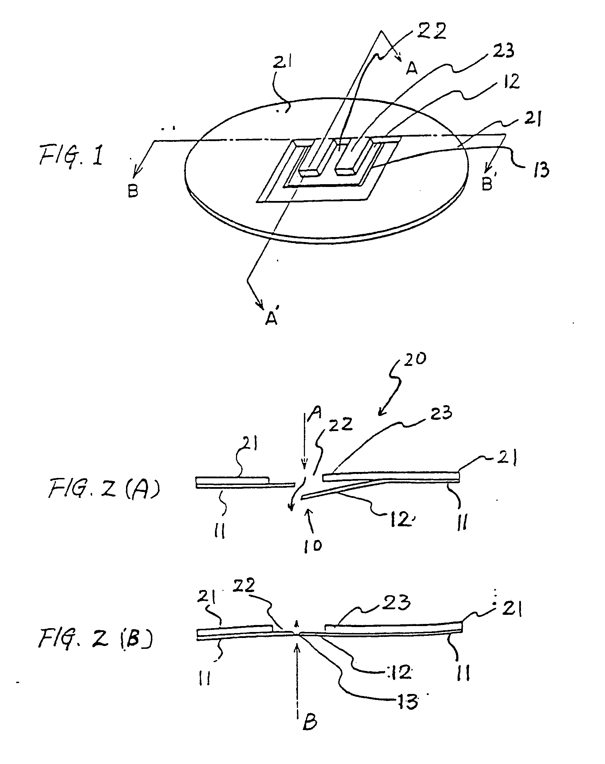

In Figs. 1 and 2, the first embodiment comprises a valve member 10 of flat plate. The valve member 10 is composed of a plate member 11 and a tongue portion 12 separated from the plate member 11 by a fine slit 13, whereby the tongue portion 12 is movable in a vertical direction in Figs. 2(A) and 2(B). A valve seat 20 has a thickness of several microns and is composed of a flat plate portion 21, an opening portion 22 provided at its center, and stopper members 23 projecting into the opening portion 22. The valve member 10 and the valve seat 20 are positioned so that the stopper members 23 are faced with the tongue portion 12.

The valve member 10 and the valve seat 20 are formed by means of a photoelectroforming technique including a combination of a patterning technique using a photoresist and plating technique. Corrosion-resisting metals, such as nickel, chromium, aluminium, and the like, are suitable for use as the metallic materials for the valve member 10 and the valve seat 20.

The tongue portion 12 is formed by separating its three sides from the plate member 11 by means of

2

the fine slit 13 without cutting the remaining one side, whereby the tongue portion 12 is movable about the non-separated side in the vertical direction in Figs. 2(A) and 2(B). The stopper members 23 limit the movement of the tongue portion 12 as shown in Fig. 2(B).

When a pressure is applied in a forward direction A as shown in Fig. 2(A), the tongue portion 12 of the valve member 10 is moved downward, thereby to allow flow of ink of predetermined amount. When the pressure is reversed, that is, the pressure is applied in the reverse direction B as shown in Fig. 2(B), the tongue portion 12 is moved upward and stopped by the stopper member 23. As a result, only a small amount of ink flows thorugh the fine slit 13.

In the first embodiment, an example of the valve element suitable for an ink-jet printer head is as follows:

| | |
|---|---|
| —thickness of the tongue portion 12 (valve member 10) | 4 µm |
| —length of the tongue portion 12 | 200 µm |
| —width of the tongue portion 12 | 600 µm |
| —width of the fine slit 13 | less than 1 µm |

When a pressure of 0.5 atmospheric pressure is applied, the ink flow rate is 25 mm³/sec in the forward direction A, and 2 mm³/sec in the reverse direction B, thereby giving a forward to reverse ratio of higher than 10. It is experimentally confirmed that the ink-jet printer head has operated at a high droplet-forming frequency of 10 KHz.

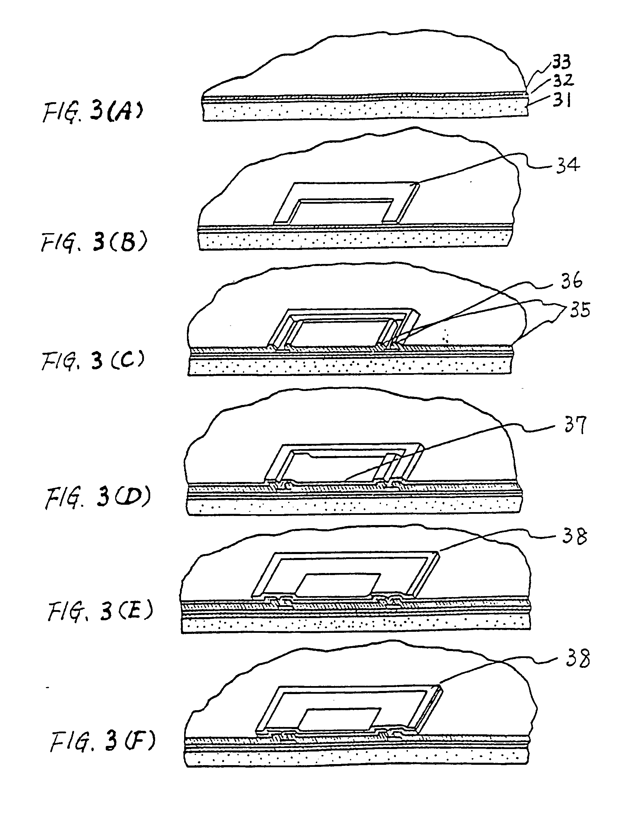

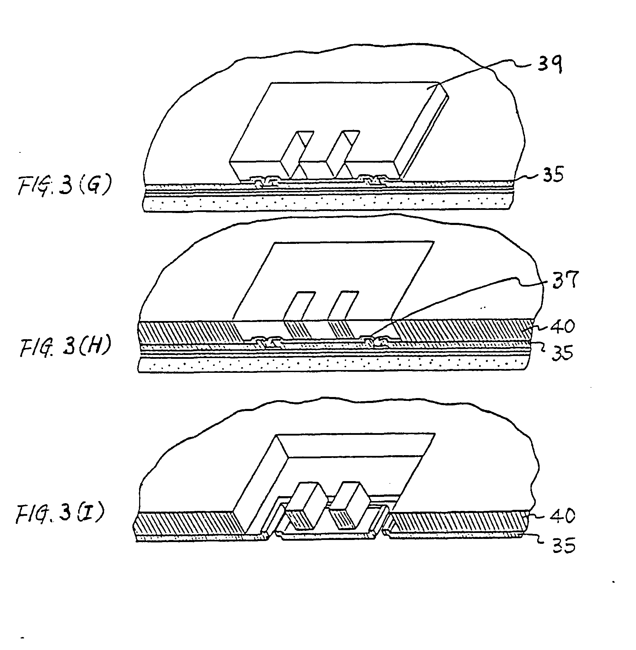

Figs. 3(A) to 3(I) show the production process for making the valve element according to the first embodiment. As shown in Fig. 3(A), on a substrate 31 such as a glass, a first metallic layer 32 of a metal having a high conductivity and adhesive characteristic, such as chromium and aluminium is formed by means of a vacuum deposition or sputtering technique. A second metallic layer 33 of a metal such as nickel or chromium is formed on the first metallic layer 32 by means of a vacuum deposition or sputtering technique. The metal for the second metallic layer 33 is selected to be same as or able to plate to a plating metal which will be described below.

Next, as shown in Fig. 3(B), a first resist pattern 34 for use in forming the fine slit 13 (Figs. 1 and 2) is formed by means of a photolithograph technique. Then, a first plating layer 35 of the plating metal such as nickel or chromium is formed at a portion except for the first resist pattern 34 so that the plating thickness is greater than the thickness of the first resist pattern 34, whereby the plating layer is grown from the both sides of the first resist pattern 34 to form a fine gap 36, as shown in Fig. 3(C).

Then, as shown in Fig. 3(D), a third metallic layer 37 of metal such as aluminium capable of selective-etching on the first metallic layer 32 is formed on the whole surface by means of vacuum deposition or sputtering technique. Next, as shown in Fig. 3(E), a second resist pattern 38 is formed by means of photolithograph technique. The second resist pattern 38 is used for forming a spacer for separating the tongue portion 12 of the valve member 10 from the stopper members 23. In the next step, as shown in Fig. 3(F), the third metallic layer except for a portion covered by the second resist pattern 38 is removed by means of etching technique and then the second resist pattern 38 is removed.

In the following step, as shown in Fig. 3(G), a third resist pattern 39 having a thickness of 40 to 50 µm is formed by means of LAMINAR-AX marketed by DYNACHEM Corporation. This step is for forming the valve seat 20 and the opening portion 22 having a uniform thickness by means of the electroforming technique. Then, a second plating layer 40 having a thickness substantially equal to that of the third resist pattern 39 is formed on whole surface except for the portion covered by the third resist pattern 39, as shown in Fig. 3(H).

In the final step, the portions unnecessary for the valve element are removed as shown in Fig. 3(I). More specifically, the glass substrate 31 is removed by dissolving by means of hydrofluoric acid. The third resist pattern 39 is removed by dissolving by means of ALKASTRIP-99A marketed by DYNACHEM Corporation. The third and first metallic layers 37 and 32 are removed and then the second metallic layer 33 is removed by means of selective-etching technique. In this case, even when the same metal, for example, nickel is used as the metal for the first and second plating layers 35 and 40 and the second metallic layer 33, the second metallic layer 33 can be removed without affecting the first and second plating layers 35 and 40 by using a difference in material and thickness. Finally, the first resist layer 34 is removed and then washing is performed.

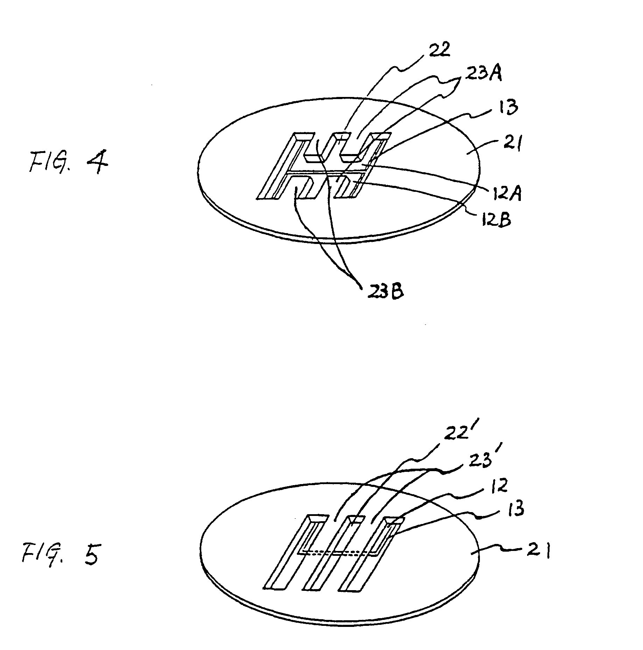

Referring to Figs. 4 and 5, there are shown the second and third embodiments, respectively. The second embodiment comprises first and second tongue portions 12A and 12B positioned symmetrically and second two-stopper members 23A and 23B provided in correspondence to the first and second tongue portions 12A and 12B, respectively.

The third embodiment comprises three opening portions 22' and two stopper members 23' separating the opening portions 22'. The stopper members 23' ensure the stopping operation.

## Claims

1. A valve element for use in an ink-jet printer head, comprising: a valve member (10) having a plate member (11), a tongue portion (12) and a fine slit (13) which opens to form or closes to block an ink passageway, the tongue portion (12) being separated from the plate member (11) by the fine slit (13), and being movable to open or close the ink passageway; and a valve seat (20) having a flat plate portion (21), an opening portion (22) and a stopper member (23) for limiting tongue movement when the ink passageway is closed; characterised in that the fine slit (13) is positioned within an area of the opening portion (22), and the stopper member (23) projects into the opening portion (22) so as to overlie and confront the tongue portion (12) of the valve member (10).

2. A valve element according to claim 1, characterised in that the opening portion (22) is formed into at least one U-shaped opening to define at least one elongated member (23) integral with the flat plate portion (21), the elongated member projecting into the opening portion (22) to form the stopper member.

3. A valve element according to claim 2, characterised in that there are at least two spaced parallel ones of the elongated stopper members (23) of the flat plate portion (21) projecting into the opening portion (22).

4. A valve element according to claim 1, characterised in that the opening portion (22) has at least one generally H-shaped opening (13) to define at least two confronting elongated members (23A and 23B) of said flat plate portion (21), the elongated members projecting into the opening portion (22) to form the stopper member.

5. A valve element according to claim 4, characterised in that there are two sets of confronting elongated stopper members (23A and 23B) of the flat plate portion (21).

**Patentansprüche**

1. Düsenelement für die Verwendung in einem Tintenstrahldruckerkopf, mit: einem Düssenglied (10) mit einem Plattenglied (11), einem Zungenbereich (12) und einem feinen Spalt (13), der sich öffnet bzw. schließt, um einen Tintendadurchlaß zu bilden bzw. zu blockieren, wobei der Zungenbereich (12) von dem Plattenglied (11) durch den feinen Spalt (13) getrennt wird und zum Öffnen oder Schließen des Tintendurchlasses bewegbar ist; und einem Ventilsitz (20) mit einem abgeflachten Plattenbereich (21), einem Öffnungsbereich (22) und einem Stopperglied (23) zum Begrenzen der Zungenbewegung, wenn der Tintendurchlaß geschlossen ist; dadurch gekennzeichnet, daß der feine Spalt (13) in einem Gebiet des Öffnungsbereichs (22) angeordnet ist und das Stopperglied (23) sich in den Öffnungsbereich (22) erstreckt, um so auf dem Zungenbereich (12) des Düsengliedes (10) zu liegen und diesem gegenüberzustehen.

2. Düsenelement nach Anspruch 1, dadurch gekennzeichnet, daß der Öffnungsbereich (22) in zumindest einer U-förmigen Öffnung angeordnet ist, um zumindest ein verlängertes Glied (23) einheitlich mit dem abgeflachten Plattenbereich (21) auszubilden, wobei sich das verlängerte Glied in den Öffnungsbereich (22) erstreckt, um das Stopperglied zu bilden.

3. Düsenelement nach Anspruch 2, dadurch gekennzeichnet, daß sich zumindest zwei der verlängerten Stopperglieder (23) des abgeflachten Plattenbereichs (21), die parallel sind und einen Zwischenraum aufweisen, in den Öffnungsbereich (22) erstrecken.

4. Düsenelement nach Anspruch 1, dadurch gekennzeichnet, daß der Öffnungsbereich (22) zumindest eine im wesentlichen H-förmige Öffnung (13) aufweist, um zumindest zwei gegenüberstehende verlängerte Glieder (23A und 23B) des abgeflachten Plattenbereiches (21) auszubilden, wobei sich die verlängerten Glieder in den Öffnungsbereich (22) erstrecken, um das Stopperglied zu bilden.

5. Düsenelement nach Anspruch 4, gekennzeichnet durch zwei Reihen gegenüberstehender verlängerter Stopperglieder (23A und 23B) des abgeflachten Plattenbereichs (21).

**Revendications**

1. Elément de clapet pour utilisation dans une tête d'impression à jet d'encre, comprenant: un organe de clapet (10), ayant un organe en forme de plaque (11), une partie formant une languette (12) et une fente fine (13), qui s'ouvre pour former un passage d'encre ou qui se ferme pour bloquer ce passage, la languette (12) étant séparée de la plaque (11) par la fente fine (13) et étant mobile de façon à ouvrir ou fermer le passage d'encre; et un siège de clapet (20) ayant une partie en forme de plaque plate (21), une partie formant ouverture (22) et un organe de butée (23) pour limiter le déplacement de la languette lorsque le passage d'encre est fermé, caractérisé en ce que la fente fine (13) est placée à l'intérieur d'une zone de la partie d'ouverture (22) de façon à recouvrir et faire face à la languette (12) de l'organe de clapet (10).

2. Element de clapet selon la revendication 1, caractérisé en ce que la partie d'ouverture (22) est conformée selon au moins une ouverture en forme de U, de façon à définir au moins un organe allongé (23) faisant partie intégrante de la plaque plate (21), cet organe allongé faisant saillie dans l'ouverture (22) pour constituer l'organe de butée.

3. Elément de clapet selon la revendication 2, caractérisé en ce qu'il y a au moins deux organes de butée allongés (23), parallèles entre eux et séparés les uns des autres, faisant saillie dans l'ouverture (22).

4. Elément de clapet selon la revendication 1, caractérisé en ce que la partie d'ouverture (22) a au moins une ouvertue (13) ayant la forme générale d'un H, de façon à définir au moins deux organes allongés (23A et 23B), se faisant face, faisant partie de ladite plaque plate (21), ces organes allongés faisant saillie dans la partie d'ouvertue (22) pour constituer l'organe de butée.

5. Elément de clapet selon la revendication 4, caractérisé en ce qu'il y a deux groupes d'organe de butée allongés (23A et 23B), se faisant face, faisant partie de la plaque plate (21).

FIG. 1

FIG. 2 (A)

FIG. 2 (B)

FIG. 3(A)

FIG. 3(B)

FIG. 3(C)

FIG. 3(D)

FIG. 3(E)

FIG. 3(F)

33
32
31

34

36
35

37

38

38

FIG. 3 (G)

39

35

FIG. 3 (H)

37

40

35

FIG. 3 (I)

40

35

FIG. 4

FIG. 5